# EUROPEAN PATENT SPECIFICATION

(11) **EP 3 190 278 B1**
(45) Date of publication and mention of the grant of the patent: **20.03.2019**
(21) Application number: 17150890.6
(22) Date of filing: 10.01.2017
(51) Int. Cl.: F01N 3/20, B67D 7/04, B60K 15/04

(54) **VEHICLE FLUID DELIVERY SYSTEM**
FAHRZEUGFLÜSSIGKEITSAUSGABESYSTEM
SYSTÈME DISTRIBUTEUR DE FLUIDE DE VÉHICULE

(30) Priority: 11.01.2016 GB 201600460
(43) Date of publication of application: 12.07.2017
(73) Proprietor: Micro-Mesh Engineering Limited, Nottingham, Nottinghamshire NG6 8WA (GB)
(72) Inventor: Underwood, James R, Nottingham, NG6 8WA (GB); Underwood, Robert H, Nottingham, NG6 8WA (GB)
(74) Representative: Adamson Jones

(56) References cited:
- DE-A1-102011 086 022
- DE-U1- 20 212 980

## Description

### BACKGROUND OF THE INVENTION

The present invention relates to vehicle fluid delivery systems, and more particularly, although not exclusively, to a combustion engine exhaust fluid delivery system.

The ongoing trend toward reducing harmful vehicle engine emissions has seen the introduction of diesel exhaust fluid (DEF, also known as AdBlue®) for use in selective catalytic reduction (SCR) to reduce the concentration of NOX in exhaust emissions from diesel engines. DEF is an aqueous urea solution typically having a composition of 32.5% high-purity urea and 67.5% deionized water, and is typically injected into the exhaust stream of a vehicle by a metering system. Thus, in order to use DEF it is necessary for the DEF to be stored on-board a vehicle in a fluid storage tank separate from the fuel tank.

In order to ensure that DEF achieves its desired function, it is necessary that the DEF solution is kept substantially free from impurities. In particular, it has been found that SCR systems are particularly sensitive to chemical impurities. It has previously been proposed to use filter assemblies in vehicle fluid tanks to filter the fluid prior to its intended use. However such filter assemblies are typically integrated into the fluid tank itself, thereby making maintenance of the filter time consuming and costly, particularly where the entire tank has to be replaced due to degradation of the filter, and further leading to a build-up of impurities within the tank itself.

The above problems are compounded by the variety of different storage solutions that exist for DEF. Whilst some facilities have dedicated pumps for DEF, others make use of more ad-hoc DEF storage and delivery solutions, including freestanding containers, bottles, cans and the like, which increase the risk of contaminants. Furthermore, DEF tends to crystallise upon contact with air, and whilst crystals may dissolve over time when in contact with liquid DEF, DEF crystals can cause filtration problems which may affect the performance of the diesel engine.

DE 10 2011 086022 A1 discloses an on-board DEF conveying module fitted as a hydraulic system in a vehicle for use during vehicle operation.

There has now been devised a vehicle fluid delivery system which overcomes or substantially mitigates at least one of the aforementioned and/or other disadvantages associated with the prior art.

According to the present invention there is provided a combustion engine exhaust fluid delivery system for pumping exhaust fluid from an exhaust fluid source to a fluid storage tank on-board a vehicle, the system comprising a primary fluid conduit having a first end insertable into an exhaust fluid source to allow selective fluid communication between the exhaust fluid source and the primary fluid conduit, a pump for pumping exhaust fluid out of the fluid source via the primary conduit towards a fluid storage tank, a secondary fluid conduit located downstream of the primary fluid conduit and the pump, and at least one filter for filtering the exhaust fluid as it flows towards the fluid storage tank, wherein the primary fluid conduit comprises a non-return valve configured such that exhaust fluid is retained within the primary fluid conduit after an instance of use of the pump has ceased, characterised in that first end of the primary fluid conduit comprises a free end which is capable of loose insertion into, or coupling with, the exhaust fluid source so as provide for the selective fluid communication therewith and in that the system comprises a vehicle fluid tank cap assembly connected in fluid communication with the secondary fluid conduit (20), the cap assembly being attachable to an inlet of the fluid storage tank on-board a vehicle.

Since vehicle ancillary fluid is retained within the primary fluid conduit when the fluid delivery system is not is use, crystallisation of fluid within the primary fluid conduit may be at least partially prevented. This may thus mitigate for filtration problems and/or other problems with the delivery of crystals or other particulate material which may affect the performance of a diesel engine.

The ancillary fluid may comprise a combustion engine exhaust treatment fluid or a diesel engine exhaust fluid (DEF, also known as AdBlue®). The invention is particularly well suited to engine ancillary fluids for which crystallisation can occur upon contact with air. The invention is also well suited to ancillary fluids for which a variety of storage solutions exist, e.g. portable receptacles such as bottles or cans, drums, and static tanks off-vehicle, as well as vehicle-based storage tanks. Thus there exists a constant need to transfer the ancillary fluid from one receptacle or tank to another. Accordingly, the ancillary fluid source may comprise a vehicle fluid canister, or container, or bottle, or can, or drum or tank, or the like.

Herein below the ancillary fluid is referred to as an engine exhaust fluid since this represents the primary use for which the fluid delivery system was invented.

The primary fluid conduit may comprise a connection formation for connecting to an exhaust fluid source. The connection formation may be located at the free end of the primary fluid conduit. The connection formation may comprise a sealing formation, such that the primary fluid conduit and the vehicle fluid source are in sealed fluid communication when connected together. The connecting formation may comprise a releasable connection, such that the primary fluid conduit and the vehicle fluid source are selectively connectable for use and releasable thereafter.

The pump may be located downstream of the primary fluid conduit in the direction of flow from the fluid source in use, e.g. so as to apply suction through the first end of the primary conduit. The pump may be arranged in line with the fluid conduit. The pump may be capable of pumping vehicle fluid from the pump into the onboard vehicle exhaust fluid storage tank, in use.

The pump may comprise, for example, a 12V or a 24 V pump.

The at least one filter may be located downstream of the primary fluid conduit and/or the pump. The at least one filter may be disposed in a vehicle fluid flow path between a vehicle fluid source and the onboard vehicle fluid storage tank.

The at least one filter may be configured to filter particulate matter from the flow through the primary conduit.

The filter may comprise a fine filter material. The filter may comprise a 100 µm filter or less, e.g. having a pore size of 100 µm or less, or else being arranged to filter out particulate material having a diameter of 100 µm or greater. The filter size may be 50-100 µm or lower. The filter size may be as low as 10 µm or in the range 10 to 50 or 100 µm.

The at least one filter may be removable from the vehicle fluid delivery system, e.g. for cleaning and/or replacement. The at least one filter may comprise a filter element located within a filter housing. The filter element and/or filter housing may be removable from the vehicle fluid delivery system.

The filter and the pump may be integrated in a combined filter and pump unit. The combined filter and pump unit may be located downstream of the primary fluid conduit.

At least one filter may be housed within the vehicle fluid tank cap assembly of the fluid storage tank. The fluid tank cap assembly may comprise a removable filter cartridge.

The fluid tank cap assembly may comprise a fluid level indicator for indicating the level of fluid contained within the fluid storage tank. The fluid level indicator may be in communication with the pump, for example in electronic communication with the pump, such that operation of the pump is ceased when the level of vehicle fluid within the fluid storage tank detected by the fluid level indicator is at or above a pre-determined threshold. The fluid level indicator may be attached to, or otherwise control operation of, a valve, such as an outlet valve of the system. The pre-determined threshold may be the maximum vehicle fluid capacity of the fluid storage tank.

The at least one filter may comprise a plurality of filters, at least one of which may be housed within a fluid tank cap assembly, e.g. of an on-board vehicle exhaust fluid storage tank.

The fluid tank cap assembly may comprise a removable cap and lockable engagement means for selectively actuating the cap assembly, in use, between a first configuration in which the cap assembly is removable from an inlet of an ancillary fluid storage tank, and a second configuration in which the cap assembly is engaged with the inlet for normal use such that the cap assembly remains engaged with the inlet whilst the cap is selectively removable for filling of the ancillary fluid storage tank.

The non-return valve may comprise a moveable valve member and a static valve member or seat. The non-return valve may comprise a suction non-return valve, for example a valve which is configured to be open in response to suction applied to the moveable valve member, and which is configured to be closed in the absence of suction applied to the valve member. The moveable valve member may be biased to a closed valve condition. The valve member may be resiliently moved relative to the static valve member when a negative pressure gradient exists across the valve, e.g. negative pressure gradient above a predetermined threshold, so as to expose/create a flow opening into an internal flow passage of the valve.

The non-return valve may be a fluid inlet valve for the system.

The non-return valve may be a part of the primary fluid conduit, e.g. being integrally formed with, or connected to, the primary fluid conduit. The non-return valve may or may not be located internally of the primary fluid conduit. The non-return valve may be located at an end region of the primary fluid conduit. The non-return valve may be located at the free end of the primary fluid conduit.

Vehicle fluid may be retained within the primary fluid conduit such that substantially no air is contained within the primary fluid conduit when the vehicle fluid delivery system is not in use.

The secondary fluid conduit may have a free end, e.g. such that the free end can be placed in fluid communication with the inlet of the fluid storage tank via the fluid tank cap assembly attached to the inlet of the fluid storage tank.

The secondary fluid conduit may comprise a connection formation for connecting to the fluid storage tank. The connection formation may be located at the free end of the secondary fluid conduit.

The connection formation may comprise a seal, such that the secondary fluid conduit and the fluid storage tank are in sealed fluid communication when connected together. The connecting formation may comprise a releasable connection, such that the secondary fluid conduit and the fluid storage tank are selectively connectable to one another.

The primary and secondary conduits may be on opposing sides of the pump and/or at least one filter. The primary conduit may communicate with the pump inlet and the secondary conduit may receive fluid from a pump outlet.

The secondary fluid conduit may comprise a valve, e.g. an outlet valve, such that vehicle fluid is retained within the secondary fluid conduit when the vehicle fluid delivery system is not in use. The valve may comprise a moveable valve member and a static valve member or seat. The non-return valve may be configured to be open in response to positive pressure applied to the interior of the second conduit, e.g. a positive pressure above a predetermined threshold. The moveable valve member and/or valve seat may be biased to a closed condition. The valve may be configured to be closed in the absence of the positive pressure gradient across the valve member.

The outlet valve may be configured to be open when the pump is in operation and may be configured to be closed when the pump is not in operation. The outlet valve may be configured to close when an external force on the outlet valve substantially matches the pressure applied by the pump or else when the positive pressure gradient across the valve is less than a threshold value. The valve member may be actuated relative to the static valve member or seat when the positive fluid pressure gradient is applied via the secondary fluid conduit.

The outlet valve may be integrally formed with, or connected to, the secondary fluid conduit. The outlet valve may be located at an end region, e.g. at the free end, of the secondary fluid conduit.

Ancillary fluid may be retained within the secondary fluid conduit such that substantially no air is contained within the secondary fluid conduit when the vehicle fluid delivery system is not in use.

Either or both of the primary and secondary fluid conduit may be flexible. Either or both fluid conduit may be substantially inextensible, ie may have a substantially fixed length. Either or both fluid conduit may be elongate in form and may be substantially inextensible along a primary longitudinal axis of the primary fluid conduit.

Either or both of the primary and secondary fluid conduit may comprise a hose. Either or both conduit may have hoop strength such that it is flexible but not readily collapsible, e.g. in a manner that would block fluid flow in use.

Either or both fluid conduit may be selectively removable from the remainder of the vehicle fluid delivery system, such that that the primary fluid conduit can be cleaned and/or replaced.

The pump, or the combined filter and pump unit, may be mounted on a support structure, such as a frame or chassis. The support may comprise a bracket or base for mounting the support to a surface, and may, for example, comprise a bracket for mounting the support to a wall, floor, opposing bracket or a surface of a vehicle. Additionally or alternatively, the support may be free standing on its bracket/base. A common chassis may be provided for the combined filter and pump unit, e.g. in which the pump and filter housing are mounted in a side-by-side arrangement.

The support may comprise a power source, power connector and/or power converter/adapter.

The system may be provided as a unit or module comprising the pump mounted to the support with the primary conduit depending from the pump and the secondary conduit depending from the pump and/or filter. The use of two flexible conduits hanging from the mounted unit structure is useful in providing a general purpose unit that can transfer exhaust fluid from one receptacle or container to another without requiring bespoke container types or other equipment. The unit can thus be mounted on a vehicle or retained in a ground based facility to allow filling on on-vehicle storage tanks in an ad-hoc manner from the available fluid source without jeopardising or otherwise contaminating the tank contents.

The system may comprise a modular system, e.g. mountable to a vehicle or to a static mounting point. The exhaust fluid source may be a separate component to the system, for example such that the system is provided as a module which can be used with any number of different exhaust fluid sources.

The pump may cease pumping operation, e.g. automatically, in response to any or any combination of: a storage tank fluid level indicator; closing of a valve in the primary or secondary fluid conduit; a pressure reading in the primary fluid conduit, secondary fluid conduit and/or filter; and, a pressure gradient across the pump, e.g. an abnormal pressure gradient.

The fluid delivery system may comprise a clogging indicator for indicating blockages in the system, e.g. based on a flow rate or pressure or pressure gradient reading. The clogging indicator may be activated when a blockage occurs in the system, and may output a visual indicia representative of a blockage to a user.

The system may comprise a controller arranged to receive one or more input described above and to output a control signal to the pump and/or an alert signal to a user according to the sensed input or combination of inputs.

In view of the discussion herein, it will be appreciated by the skilled person that the specific problems faced by combustion engine exhaust treatment fluids and associated delivery systems are different from those of vehicle fuel delivery systems. Accordingly, combustion fuel delivery systems are not within the scope of the present invention.

### BRIEF DESCRIPTION OF THE DRAWINGS

Practicable embodiments of the invention will now be described in more detail, with reference to the accompanying figures, of which;
Figure 1 is a schematic view of a system according to the present invention;
Figure 2 shows further detail of the non-return valve of Figure 1 in open and closed conditions;
Figure 3 is a perspective view of an embodiment of a vehicle exhaust fluid tank cap assembly for use with the system of Figure 1; and
Figure 4 is a sectional view through the cap assembly of Figure 3.

### DETAILED DESCRIPTION

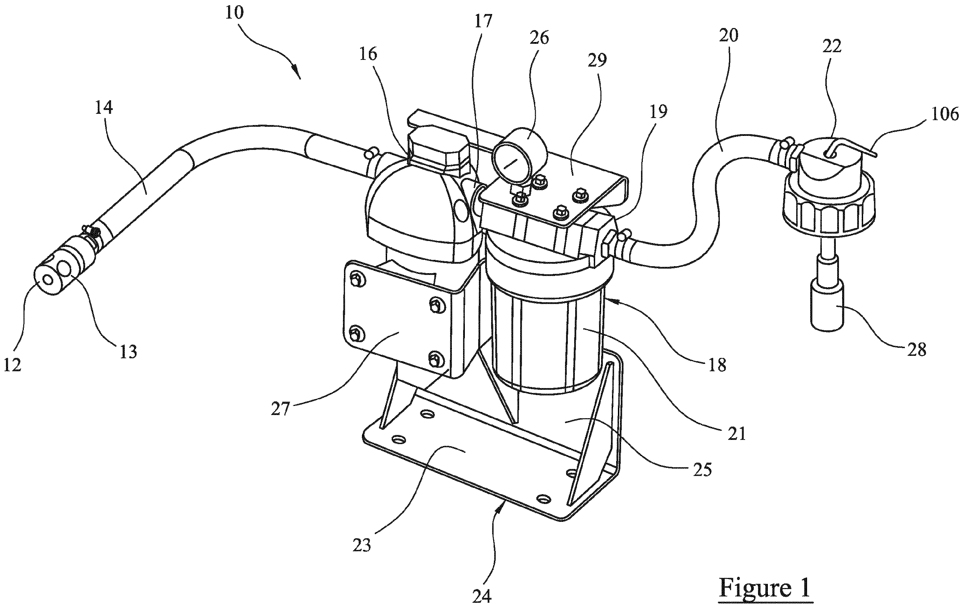

A vehicle fluid delivery system, generally designated 10, is shown in a schematic view in Figure 1.

The vehicle fluid delivery system 10 comprises a non-return valve housing 12, a first fluid conduit 14, a pump module 16, a filter module 18, a second fluid conduit 20, and a vehicle fluid tank cap assembly 22. Whilst the vehicle fluid delivery system 10 is shown here with a vehicle fluid tank cap assembly 22, it will be recognised that embodiments without a vehicle fluid tank cap assembly 22 are also envisaged. The tank cap assembly 22 allows for a tank cap that can be safely used with the delivery system of the present invention as well as other possible delivery solutions.

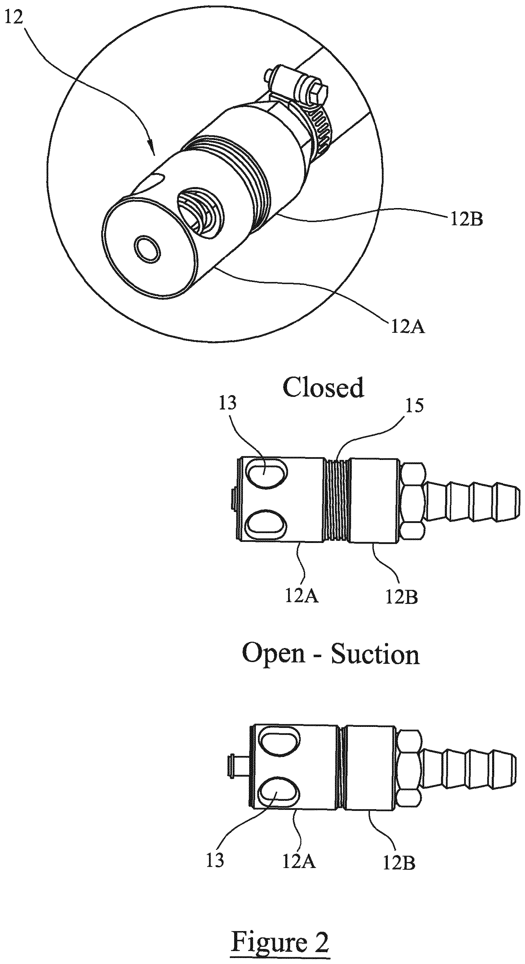

As seen in further detail in Figure 2, the non-return valve housing 12 comprises a suction non-return valve, ie a valve which is open when a suction is applied to/across the valve, but which is closed in the absence of suction applied to/across the valve. This is achieved by use of a biased valve/seal member which is biased to a closed condition when at rest. The housing 12 has one or more opening 13, e.g. in a side wall portion of the valve housing immediately adjacent its distal end.

A fixed portion 12B of the valve housing s connected to a moveable portion 12A of the housing by a resiliently deformable intermediate section 15. The intermediate section 15 in this example comprises a concertina/sleeve of resiliently deformable material, such as a rubber, silicone, or the like. The openings 13 are provided in the moveable portion 12A. When suction is applied to the internal passage within the valve housing, e.g. via the connector end, the housing portion 12A is actuated towards the housing portion 12B, thereby exposing a flow opening into the interior of the valve housing such that fluid from outside the housing can flow into its interior via openings 13. Thus the opening(s) 13 define the valve housing 12 inlet in use and the outlet is provided at the connector on the opposing side of the valve member. The first conduit 14 is attached to the connector of the valve 12 by a hose clamp at its free end.

When the internal suction is removed, the housing portion 12A is biased away from portion 12B by a spring and/or the resilience of the intermediate material 15 so as to close off access to the flow passage in the valve housing interior.

Turning back to Figure 1, the first fluid conduit 14 is connected in fluid communication with the non-return valve 12. The first fluid conduit 14 is substantially tubular in form, and is flexible in that it may bend along its length. The wall thickness is such that the conduit generally resists collapse and may additionally comprise one or more strengthening hoops or embedded wall strengthening material, e.g. fibres or strands, as necessary.

The pump unit 16 is connected in fluid communication with the first fluid conduit 14 at a pump inlet opening, which may be provided by a nozzle formation on the pump unit 16 housing, to which the end of the conduit 14 can be clamped. An outlet of the pump unit 16 is connected in fluid communication with the filter unit 18, i.e. to an inlet of the filter unit 18.

The filter 18 comprises a filter element retained within a filter housing. The filter 18 is located in the flow path of the exhaust treatment fluid flow through the vehicle fluid delivery system 10, i.e. downstream of the pump unit 16 but upstream of the second conduit 20. The filter unit 18 is immediately downstream of the pump unit and rigidly attached thereto, e.g. with no intervening hose. In other arrangement, the upstream/downstream arrangement of the pump and filter units could be reversed.

The pump unit 16 and filter unit 18 are retained by a common support structure or bracket 24 so as to provide a singular commonly mounted system. The support structure 24 is formed of a thin-walled/sheet metal structure but could otherwise be formed of a plastics material. The support structure comprises a base 23 which takes the form of a plate having openings for application of conventional fasteners, such as screws or bolts.

An upstanding wall 25 depends from the base 23 at an angle thereto, e.g. a substantially perpendicular angle. A first portion 27 of the upstanding wall 25 is bent out of the plane of the wall so as to define a partial enclosure for the pump unit 16. The first portion thus partially surrounds the pump unit, e.g. around three sides, and provides a mounting bracket to which the pump unit 16 can be fastened using conventional fasteners.

A second portion 29 of the upstanding wall 25 is also bent out of the plane of the wall to provide a mounting bracket for the filter unit 18. The second portion may provide a top cover or support for the filter unit 18, such that the remainder/sides of the filter unit are exposed.

The filter unit 18 housing comprises a first housing section 19 rigidly attached to the portion 29 and a lower housing section, comprising a detachable filter housing section, e.g. in the form of a filter receptacle or cup. The first/upper housing section 19 has the filter unit inlet and outlet openings therein and the filter unit mounting features. The first and second housing sections are typically releasably attachable by a screw thread arrangement but could otherwise comprise a push fit or latching arrangement to seal the housing portions together about a circumferential edge for use, i.e. so as to define the enclosed filter recess inside, within which a filter element can be held for use.

The pump bracket portion 27 of the support structure beneficially exposes the filter unit for simple access to the removable housing portion 21 in use. The support construction of Figure 1 can be made fully of sheet material whilst providing a number of desirable functional attributes.

The bracket is attachable to a desired surface, for example a wall or a surface of a vehicle, e.g. by the openings in its base 23. The base allows the support structure 24 to also be freestanding on its base in case it is desirable to provide the system 10 as a portable unit.

The system comprises a clogging/flow indicator 26 in the form of a pressure dial gauge. The indicator thus provides a flow pressure sensor for flow through the filter unit 18. In normal use, a constant pressure should achieved within predetermined upper/lower thresholds. A blockage in the system, downstream of the pump, e.g. by clogging of the filter, will result in elevated pressure indicative of a need to change the filter or otherwise remove a blockage. An insufficient operating pressure may indicate substandard pump operation or a blockage upstream of the pump. Flow pressure sensors may be provided at further/different locations in the system in further embodiments of the invention.

The second fluid conduit 20 is connected in fluid communication with the outlet of the filter unit 18. The second fluid conduit 20 is substantially tubular in form, and is flexible in that it may bend along its length. The first and second conduits may be similar or the same in construction and may be of the same or differing lengths.

The vehicle fluid tank cap assembly 22 is connected in fluid communication with the second fluid conduit 20. The vehicle fluid tank cap assembly 22 comprises a vehicle fluid level indicator 28. The vehicle fluid level indicator 28 may be electrically connected to the pump 16, and is configured to turn off the pump 16 when the vehicle fluid level within an on-board vehicle fluid storage tank reaches a maximum level. A simple controller or logic switch may be provided such that when the maximum fluid level is sensed by the level indicator 28, the power to the pump is inhibited.

The fluid level indicator could comprise a float, dip stick/tube and/or a liquid contact sensor of conventional type. In one example, the buoyancy of a float could be used to close a valve or cause contact between adjacent members within the cap assembly indicative of a maximum fluid level having been reached. The closing of a valve via a float may be useful in resisting flow along the conduit 20, thereby providing pressure feedback to the pump and/or indicator 26, which could be used as a control signal to cease pump operation. This would conveniently allow the internal fluid pressure within the system to provide clogging and/or tank filling feedback for control of the pump 16. However it will be appreciated that there a variety of control schemes available to the skilled person in light of the use of a valve/sensor at either or both of the conduit 14 inlet or the conduit 16 outlet.

In use, the first fluid conduit 14 is placed in fluid communication with a vehicle fluid source (not shown). The pump 16 is operated to draw vehicle fluid from the vehicle fluid source. Due to the suction from the pump 16, the non-return valve 12 is in an open configuration, and vehicle fluid can flow through the non-return valve 12 and the first fluid conduit 14. The pump 16 pumps vehicle fluid through the filter 18, and along the second fluid conduit 20, into an on-board vehicle exhaust fluid storage tank (not shown), or another ground-based storage tank, via the vehicle fluid tank cap assembly 22.

Once the level of vehicle fluid in the onboard vehicle fluid storage tank reaches a maximum level, the vehicle fluid level indicator 28 causes the pump 16 to shut off. As there is no longer any suction, the non-return valve 12 is closed, trapping vehicle fluid along the length of the first fluid conduit 14.

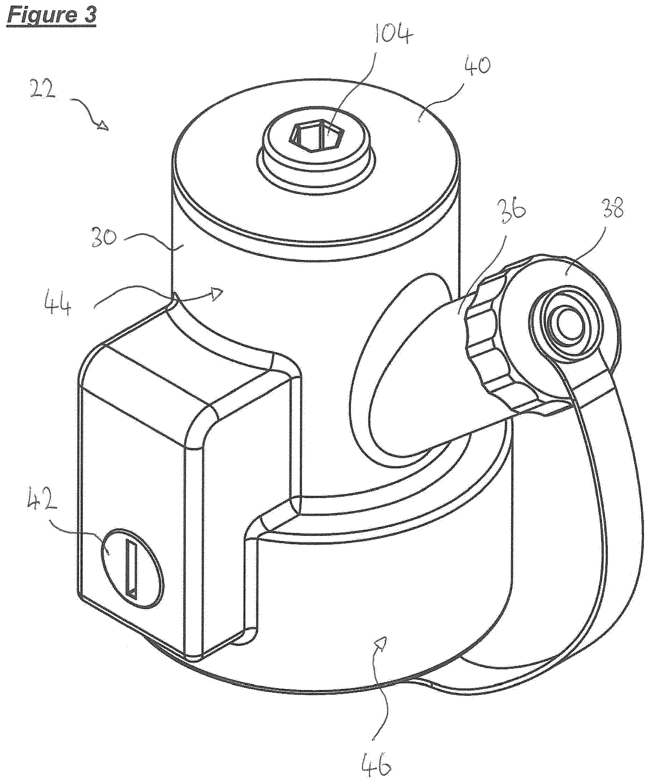

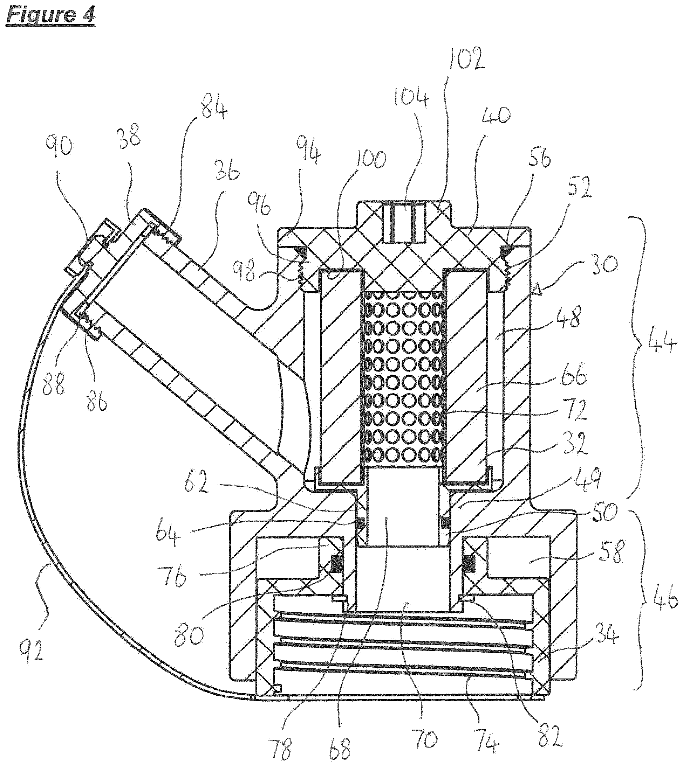

A particularly beneficial vehicle fluid tank cap assembly 22 for use with the vehicle fluid delivery system 10 is shown in Figures 3 and 4.

The vehicle fluid tank cap assembly 22 has a main body 30, a filter assembly 32, an engagement formation 34, a fluid inlet 36, a fluid inlet closure 38, a main body closure 40, and a locking formation 42.

The main body 30 has upper 44 and lower 46 portions. The upper main body portion 44 is substantially cylindrical in form, and is hollow, thereby defining an enclosure 48 and internal recess for receiving the filter assembly 32. A lower wall 49 of the enclosure 48 has an aperture for receiving a corresponding connecting formation 50 of the filter assembly 32. An uppermost region of the upper portion 44 defines an aperture for receiving the main body closure 40. An uppermost region of the inner wall of the enclosure 48 has a screw thread 52 for engaging a corresponding screw thread of the main body closure 40, and a seal 56 for preventing ingress of contaminants into the enclosure 48.

The lower main body portion 46 is substantially cylindrical in form, and is substantially hollow, thereby defining an internal chamber 58 for housing the engagement formation 34. The upper 44 and lower 46 main body portions are integrally formed, with the lower main body portion 46 being shorter, and having a larger diameter, than the upper main body portion 44. Thus the main body portion 30 has a generally inverse-T shaped cross-sectional profile, as seen in Figure 4.

The intermediate internal wall 49 separates the interior of the upper 44 and lower 46 portions of the main body 30. The filter assembly 32 is seated atop the intermediate wall 49 when mounted for use. The intermediate wall 49 has an opening to allow flow from the upper 44 to the lower 46 portion of the main body in use.

The filter assembly 32 is substantially cylindrical in form, and is dimensioned to be received within the enclosure 48 when the cap assembly 22 is assembled. The filter assembly has a downwardly depending cylindrical connecting formation 62 which is shaped and dimensioned to be received within an aperture of intermediate wall 49 when the cap assembly 22 is assembled. The connecting formation 62 comprises a seal 64 which engages with the inner edge of the aperture in the intermediate wall 49.

The filter assembly 32 has a filter material 66 which allows the passage of fluid whilst preventing the passage of particulate matter, and an internal fluid passageway 68 which is in fluid communication with the fluid inlet 36 and a fluid outlet 70 of the cap assembly 22. The filter material 66 is disposed around a central cylindrical member 72 of the filter assembly 32, with the central cylindrical member 72 comprising apertures which allow fluid to pass to the internal fluid passageway 68.

The engagement formation 34 is substantially cylindrical in form, and is substantially hollow in nature, such that the engagement formation 34 can receive an inlet of a vehicle fluid tank in use. An inner wall of the engagement formation 34 has a screw thread 74 for engaging a corresponding screw thread of an inlet of a vehicle fluid tank in use. The engagement formation 34 has an upstanding circular connection formation 76 for receiving a corresponding downwardly depending wall portion 78 of the internal chamber 58. The connection formation 76 comprises a seal 80 for sealing against the downwardly depending wall portion 78 when the cap assembly 22 is assembled.

The downwardly depending wall portion 78 depends from the intermediate wall 49 of the internal chamber 58, and extends into the hollow interior of the engagement formation 34 when assembled. The downwardly depending wall portion 78 defines a fluid outlet 70 of the cap assembly, with the fluid outlet 70 being in fluid communication with the internal fluid passageway 68 of the filter assembly 32, the fluid inlet 36, and a vehicle fluid tank inlet in use. The downwardly depending wall portion 78 comprises an annular retaining formation 82 which abuts against an internal wall of the engagement formation 34.

The engagement formation 34 is housed concentrically within the internal chamber 58, and abuts the retaining formation 82 and an underside of the intermediate wall 60 of the internal chamber 58, such that longitudinal separation of the main body 30 and engagement formation 34 is prevented.

The fluid inlet 36 is substantially cylindrical in form, and is hollow in nature, ie tubular, thereby defining a fluid passageway. The fluid inlet 36 extends at an oblique angle from the upper main body portion 44, and is in fluid communication with the internal recess of enclosure 48. The fluid inlet 36 is dimensioned to receive a desired fluid delivery device, such as a fluid nozzle or spout, therein. An uppermost end of the fluid inlet 36 has a screw thread 84 for engaging a corresponding screw thread 86 of the fluid inlet closure 38, and a seal 88 for sealing against the fluid inlet closure 38.

The fluid inlet closure 38 is substantially cylindrical in form, and is dimensioned to fit over the uppermost end of the fluid inlet 36. Thus the fluid inlet closure 38 takes the form of a cap. The fluid inlet closure 38 has a screw thread 88 for engaging the corresponding screw thread 86 of the fluid inlet 36. The fluid inlet closure 38 has an upstanding projection 90 for engaging a retaining strap 92. The restraining strap 92 is adjacent to, or fixedly connected to, the engagement formation 34 such that one end of the strap 92 is trapped on the inlet of a fluid tank to which the cap assembly 22 is applied in use. The strap 92 is releasably connected to the projection 90 at its free end, such that the restraining strap 92 can optionally be used to prevent the fluid inlet closure 38 from being completely removed from the cap assembly 22 when the fluid inlet closure 38 is unscrewed from the fluid inlet 36.

The main body closure 40 has a shoulder formation 94 and a downwardly depending plug formation 96. The shoulder formation 94 is shaped and dimensioned to abut a rim of the aperture defined by the uppermost region of the upper main body portion 44 when the main body closure 40 closes the aperture. The plug formation 96 is shaped and dimensioned to be received in the aperture defined by the uppermost region of the upper main body portion 44 when the main body closure 40 closes the aperture. The plug formation 96 has a screw thread 98 for engaging a corresponding screw thread 52 of the upper main body portion 44. The plug formation 96 has a recess 100, e.g. being annular in shape, for engaging the filter material 66, such that the filter material 66 is securely held in place in the filter assembly 32.

The plug formation 96 is integrally formed with the central cylindrical member 72 of the filter assembly 32, such that removal of the main body closure 40 from the upper main body portion 44 removes the filter assembly 32 from the enclosure 48.

The main body closure 40 has a tightening/release formation 102 that is upstanding from an upper surface of the shoulder formation 94. The formation 102 comprises a recess 104 of hexagonal cross-section for receiving a corresponding hex key 106 (visible in Figure 1). The hex key may be required to remove the main body closure 40 from the upper main body portion 44. The main body closure 40 is thus typically a friction fit on the upper portion 44 of the main body 30 by tightening the friction engagement of the screw thread formations there-between using a suitable tool. In other examples, a bespoke key shape, instead of a hex key could be used.

In use, the main body 30 and the engagement formation 34 are fixed relative to each other, such that movement of the main body 30 effects movement of the engagement formation 34. The main body 30 is grasped by a user, and is rotated so that the screw thread 74 of the engagement formation 34 engages a corresponding screw thread of an inlet of a vehicle fluid tank. When the cap assembly 22 is attached to the inlet of the vehicle fluid tank, the locking formation 42 is actuated so that the cap assembly 22 is fixed to the inlet of the vehicle fluid tank, such that the cap assembly 22 cannot be removed without causing damage to the cap assembly 22 and/or vehicle fluid tank. The main body 30 is now rotatable relative to the engagement formation.

When it is desired to fill the vehicle fluid tank, the fluid inlet closure 38 is unscrewed from the fluid inlet 36, and a fluid delivery device, for example the system shown in Figure 1, and in particular the second fluid conduit 20, may be inserted into the fluid inlet 36. Fluid flows from the fluid delivery device, through the fluid inlet, and is filtered by the filter material 66 of the filter assembly 32. The filtered fluid passes through the internal fluid passageway 68 of the filter assembly 32, and out of the fluid outlet 70, into the vehicle fluid tank.

When maintenance of the filter assembly 32 is required, the release formation 102 is used to unscrew the main body closure 40 from the upper main body portion 44 via the use of an appropriate hex key. The filter assembly 32 may be removed from the enclosure 48, either so that maintenance of the filter assembly 32 can be carried out and the filter assembly 32 can be reinserted into the enclosure 48, or so that the filter assembly 32 can be replaced by a new filter assembly. This can be achieved whilst the remainder of the cap assembly 22 remains in place on the vehicle fluid tank inlet.

If it becomes necessary to remove the cap assembly 22, then the locking formation 42 is actuated so that main body 30 is engaged with the retaining formation 34 and the cap assembly 22 can be unscrewed from the inlet of the vehicle fluid tank.

Whilst the cap assembly 22 of Figures 3 and 4 omit specific details of fluid level indicator 28, it will be appreciated that a suitable fluid level indicator or liquid contact sensor could depend from the underside of the retaining formation 34. If it is desirable to provide an outlet valve a suitable valve member and seat could be mounted to the outlet 70 as shown or by extending the outlet wall 78 by a greater distance away from the intermediate wall 49, i.e. further down into the interior of the fluid storage tank in use.

## Claims

1. A combustion engine exhaust fluid delivery system (10) for pumping exhaust fluid from an exhaust fluid source to a fluid storage tank on-board a vehicle, the system comprising:
a primary fluid conduit (14) having a first end insertable into an exhaust fluid source to allow selective fluid communication between the exhaust fluid source and the primary fluid conduit (14),
a pump (16) for pumping exhaust fluid out of the fluid source via the primary conduit (14) towards a fluid storage tank,
a secondary fluid conduit located downstream of the primary fluid conduit (14) and the pump (16), and
at least one filter (18; 66) for filtering the exhaust fluid as it flows towards the fluid storage tank, wherein the primary fluid conduit (14) comprises a non-return valve (12) configured such that exhaust fluid is retained within the primary fluid conduit (14) after an instance of use of the pump (16) has ceased;
**characterised in that** first end of the primary fluid conduit (14) comprises a free end which is capable of loose insertion into, or coupling with, the exhaust fluid source so as provide for the selective fluid communication therewith, and **in that**
the system (10) comprises a vehicle fluid tank cap assembly (22) connected in fluid communication with the secondary fluid conduit (20), the cap assembly (22) being attachable to an inlet of the fluid storage tank on-board a vehicle.

2. A fluid delivery system as claimed in Claim 1, wherein the system (10) is provided as a module comprising the pump (16) mounted to a support structure (24) with the primary conduit (14) depending from the pump (16) and the secondary conduit (20) depending from the pump (16) and/or the filter (18).

3. A fluid delivery system (10 as claimed in Claim 1, wherein the filter (18) and/or pump (16) is mounted to a support structure comprising a bracket (24) or base (23) for positioning against a support surface.

4. A fluid delivery system (10) according to Claim 3, wherein the pump (16) and filter (18) are mounted to the support structure (24) as a singular unit.

5. A fluid delivery system (10) according to Claim 3 or Claim 4, wherein the support structure (24) is free standing and/or portable.

6. A fluid delivery system (10) according to any one of Claims 3 to 5, wherein the support structure (24) comprises a sheet material structure bent to provide any, any combination or all of the base (23) or bracket (24); a partial enclosure (27) for the pump (16); and/or a mounting plate for the filter (18).

7. A fluid delivery system (10) as claimed in any preceding claim wherein the vehicle fluid tank cap assembly (22) houses the filter (66).

8. A fluid delivery system (10) as claimed in any preceding claim wherein the vehicle fluid tank cap assembly (22) comprises a fluid level indicator (28) for indicating the level of fluid contained within the fluid storage tank.

9. A fluid delivery system (10) as claimed in Claim 8, wherein the fluid level indicator (28) is in communication with the pump (16) such that operation of the pump (16) is ceased when the level of exhaust fluid within the fluid storage tank detected by the fluid level indicator (28) is at or above a pre-determined threshold.

10. A fluid delivery system (10) as claimed in any preceding claim, wherein the secondary fluid conduit (20) comprises a further non-return valve such that exhaust fluid is retained within the secondary fluid conduit (20) when the fluid delivery system is not in use.

11. A fluid delivery system (10) as claimed in Claim 10, wherein the further non-return valve is located at a distal end of the secondary fluid conduit which is capable of connection with the fluid storage tank via the vehicle fluid tank cap assembly.

12. A fluid delivery system (10) as claimed in any preceding claim, wherein the non-return valve (12) is located at the first end of the primary fluid conduit (14).

13. A fluid delivery system (10) as claimed in any preceding claim, wherein exhaust fluid is retained within the primary fluid conduit (14) such that substantially no air is contained within the primary fluid conduit (14) when the exhaust fluid delivery system is not in use.

14. A fluid delivery system (10) as claimed in any preceding claim, wherein the primary fluid conduit (14) comprises a flexible hose.

15. A fluid delivery system (10) as claimed in any preceding claim, wherein the primary fluid conduit (14) is selectively removable from the remainder of the exhaust fluid delivery system (10).

## Patentansprüche

1. Auslassfluidausgabesystem für Verbrennungsmotor (10) zum Pumpen von Auslassfluid aus einer Auslassfluidquelle zu einem Fluidspeichertank an Bord eines Fahrzeugs, wobei das System umfasst:
eine primäre Fluidleitung (14) mit einem ersten Ende, das in eine Auslassfluidquelle eingeführt werden kann, um eine selektive Fluidverbindung zwischen der Auslassfluidquelle und der primären Fluidleitung (14) zu ermöglichen,
einer Pumpe (16) zum Pumpen von Auslassfluid aus der Fluidquelle über die primäre Leitung (14) zu einem Fluidspeichertank,
einer sekundären Fluidleitung, die sich stromabwärts von der primären Fluidleitung (14) und der Pumpe (16) befindet, und
mindestens einen Filter (18; 66) zum Filtern des Auslassfluids, während es zum Fluidspeichertank strömt, wobei die primäre Fluidleitung (14) ein Rückschlagventil (12) umfasst, das so konfiguriert ist, dass nach Beenden einer erfolgten Nutzung der Pumpe (16) Auslassfluid in der primären Fluidleitung (14) gehalten wird;
**dadurch gekennzeichnet, dass** das erste Ende der primären Fluidleitung (14) ein freies Ende umfasst, das locker in die Auslassfluidquelle eingeführt oder damit gekoppelt werden kann, um die selektive Fluidverbindung damit bereitzustellen, und dass
das System (10) eine Fahrzeugfluidtankdeckelanordnung (22) umfasst, die in Fluidverbindung mit der sekundären Fluidleitung (20) verbunden ist, wobei die Deckelanordnung (22) an einen Einlass des Fluidspeichertanks an Bord eines Fahrzeugs angebracht werden kann.

2. Fluidausgabesystem nach Anspruch 1, wobei das System (10) als ein Modul bereitgestellt ist, umfassend die an eine Stützstruktur (24) montierte Pumpe (16), wobei die primäre Leitung (14) von der Pumpe (16) abhängt und die sekundäre Leitung (20) von der Pumpe (16) und/oder dem Filter (18) abhängt.

3. Fluidausgabesystem (10) nach Anspruch 1, wobei der Filter (18) und/oder die Pumpe (16) an eine Stützstruktur montiert ist, umfassend eine Klammer (24) oder Basis (23) zum Positionieren an einer Stützfläche.

4. Fluidausgabesystem (10) nach Anspruch 3, wobei die Pumpe (16) und der Filter (18) als einzelne Einheit an der Stützstruktur (24) montiert sind.

5. Fluidausgabesystem (10) nach Anspruch 3 oder Anspruch 4, wobei die Stützstruktur (24) freistehend und/oder tragbar ist.

6. Fluidausgabesystem (10) nach einem der Ansprüche 3 bis 5, wobei die Stützstruktur (24) eine Bogenmaterialstruktur umfasst, die gekrümmt ist, um eine beliebige, eine beliebige Kombination oder alle der Basis (23) oder der Klammer (24); eines Teilgehäuses (27) für die Pumpe (16) und/oder einer Montageplatte für den Filter (18) bereitzustellen.

7. Fluidausgabesystem (10) nach einem der vorstehenden Ansprüche, wobei die Fahrzeugfluidtankdeckelanordnung (22) den Filter (66) beherbergt.

8. Fluidausgabesystem (10) nach einem der vorstehenden Ansprüche, wobei die Fahrzeugfluidtankdeckelanordnung (22) einen Fluidpegelanzeiger (28) zum Anzeigen des Pegels des im Fluidspeichertank enthaltenen Fluids umfasst.

9. Fluidausgabesystem (10) nach Anspruch 8, wobei der Fluidpegelanzeiger (28) in Verbindung mit der Pumpe (16) steht, so dass der Betrieb der Pumpe (16) aufhört, wenn der vom Fluidpegelanzeiger (28) erfasste Pegel des Auslassfluids im Fluidspeichertank einen vorbestimmten Schwellwert erreicht oder überschritten hat.

10. Fluidausgabesystem (10) nach einem der vorstehenden Ansprüche, wobei die sekundäre Fluidleitung (20) ein weiteres Rückschlagventil umfasst, so dass Auslassfluid in der zweiten Fluidleitung (20) gehalten wird, wenn das Fluidausgabesystem nicht in Gebrauch ist.

11. Fluidausgabesystem (10) nach Anspruch 10, wobei sich das weitere Rückschlagventil an einem distalen Ende der sekundären Fluidleitung befindet, die über die Fahrzeugfluidtankdeckelanordnung zur Verbindung mit dem Fluidspeichertank in der Lage ist.

12. Fluidausgabesystem (10) nach einem der vorstehenden Ansprüche, wobei sich das Rückschlagventil (12) am ersten Ende der primären Fluidleitung (14) befindet.

13. Fluidausgabesystem (10) nach einem der vorstehenden Ansprüche, wobei Auslassfluid in der primären Fluidleitung (14) gehalten wird, so dass im Wesentlichen keine Luft in der primären Fluidleitung (14) enthalten ist, wenn das Auslassfluidausgabesystem nicht in Gebrauch ist.

14. Fluidausgabesystem (10) nach einem der vorstehenden Ansprüche, wobei die primäre Fluidleitung (14) einen flexiblen Schlauch umfasst.

15. Fluidausgabesystem (10) nach einem der vorstehenden Ansprüche, wobei die primäre Fluidleitung (14) selektiv vom übrigen Auslassfluidausgabesystem (10) entfernt werden kann.

## Revendications

1. Système de distribution de fluide d'échappement (10) d'un moteur à combustion pour pomper un fluide d'échappement d'une source de fluide d'échappement à un réservoir de stockage de fluide embarqué sur un véhicule, le système comprenant :
un conduit de fluide primaire (14) ayant une première extrémité pouvant être insérée dans une source de fluide d'échappement pour permettre une communication de fluide sélective entre la source de fluide d'échappement et le conduit de fluide primaire (14),
une pompe (16) pour pomper le fluide d'échappement hors de la source de fluide via le conduit primaire (14) vers un réservoir de stockage de fluide,
un conduit de fluide secondaire situé en aval du conduit de fluide primaire (14) et de la pompe (16), et
au moins un filtre (18; 66) pour filtrer le fluide d'échappement lorsqu'il circule vers le réservoir de stockage de fluide, dans lequel le conduit de fluide primaire (14) comprend un clapet antiretour (12) configuré de telle sorte que le fluide d'échappement est retenu dans le conduit de fluide primaire (14) après qu'une utilisation de la pompe (16) a cessé ;
**caractérisé en ce que** la première extrémité du conduit de fluide primaire (14) comprend une extrémité libre qui peut être insérée librement dans, ou accouplée avec, la source de fluide d'échappement de manière à permettre la communication fluide sélective avec elle, et **en ce que** le système (10) comprend un ensemble de bouchon de réservoir de fluide du véhicule (22) relié en communication fluide avec le conduit de fluide secondaire (20), l'ensemble de bouchon (22) pouvant être fixé à une entrée du réservoir de stockage de fluide embarqué sur un véhicule.

2. Système de distribution de fluide selon la revendication 1, le système (10) étant fourni sous forme de module comprenant la pompe (16) montée sur une structure de support (24) avec le conduit primaire (14) dépendant de la pompe (16) et le conduit secondaire (20) dépendant de la pompe (16) et/ou du filtre (18).

3. Système de distribution de fluide (10) selon la revendication 1, dans lequel le filtre (18) et/ou la pompe (16) sont montés sur une structure de support comprenant une patte (24) ou une base (23) permettant le positionnement contre une surface de support.

4. Système de distribution de fluide (10) selon la revendication 3, dans lequel la pompe (16) et le filtre (18) sont montés sur la structure de support (24) sous la forme d'une seule unité.

5. Système de distribution de fluide (10) selon la revendication 3 ou la revendication 4, dans lequel la structure de support (24) est autonome et/ou portable.

6. Système de distribution de fluide (10) selon l'une quelconque des revendications 3 à 5, dans lequel la structure de support (24) comprend une structure de matériau en tôle pliée pour fournir l'un quelconque, une combinaison ou la totalité de la base (23) ou de la patte de support (24); ou d'une enceinte partielle (27) pour la pompe (16) ; et/ou d'une plaque de montage pour le filtre (18).

7. Système de distribution de fluide (10) selon l'une quelconque des revendications précédentes, dans lequel l'ensemble bouchon de réservoir de fluide du véhicule (22) contient le filtre (66).

8. Système de distribution de fluide (10) selon l'une quelconque des revendications précédentes, dans lequel l'ensemble bouchon de réservoir de fluide du véhicule (22) comprend un indicateur de niveau de fluide (28) pour indiquer le niveau de fluide contenu dans le réservoir de stockage de fluide.

9. Système de distribution de fluide (10) selon la revendication 8, dans lequel l'indicateur de niveau de fluide (28) est en communication avec la pompe (16) de telle sorte que le fonctionnement de la pompe (16) cesse lorsque le niveau de fluide d'échappement dans le réservoir de stockage de fluide détecté par l'indicateur de niveau de fluide (28) atteint ou dépasse un seuil prédéterminé.

10. Système de distribution de fluide (10) selon l'une quelconque des revendications précédentes, dans lequel le conduit de fluide secondaire (20) comprend un autre clapet antiretour de telle sorte que le fluide d'échappement est retenu dans le conduit de fluide secondaire (20) lorsque le système de distribution de fluide n'est pas utilisé.

11. Système de distribution de fluide (10) selon la revendication 10, dans lequel l'autre clapet antiretour est situé à une extrémité distale du conduit de fluide secondaire qui est capable d'être raccordée avec le réservoir de stockage de fluide via l'ensemble bouchon de réservoir de fluide du véhicule.

12. Système de distribution de fluide (10) selon l'une quelconque des revendications précédentes, dans lequel le clapet antiretour (12) est situé à la première extrémité du conduit de fluide primaire (14).

13. Système de distribution de fluide (10) selon l'une quelconque des revendications précédentes, dans lequel le fluide d'échappement est retenu dans le conduit de fluide primaire (14) de telle sorte que substantiellement aucun air n'est contenu dans le conduit de fluide primaire (14) lorsque le système de distribution de fluide d'échappement n'est pas utilisé.

14. Système de distribution de fluide (10) selon l'une quelconque des revendications précédentes, dans lequel le conduit de fluide primaire (14) comprend un tuyau flexible.

15. Système de distribution de fluide (10) selon l'une quelconque des revendications précédentes, dans lequel le conduit de fluide primaire (14) est sélectivement amovible du reste du système de distribution de fluide d'échappement (10).
